# FASCICULE DE BREVET EUROPEEN

(11) **EP 1 118 626 B1**
(45) Date de publication et mention de la délivrance du brevet: **19.04.2006**
(21) Numéro de dépôt: 01200081.6
(22) Date de dépôt: 11.01.2001
(51) Int. Cl.: C08F 10/02, C08F 2/14, B01J 8/20, B01J 8/00, B01J 8/38

(54) **Procédé de fabrication d'une composition de polymères d'oléfines**
Verfahren zur Herstellung einer Zusammensetzung von Olefinpolymeren
Process for preparing a composition of olefin polymers

(30) Priorité: 18.01.2000 BE 20000035
(43) Date de publication de la demande: 25.07.2001
(73) Titulaire: Innovene Manufacturing Belgium NV, 2040 Antwerpen (BE)
(72) Inventeur: Marissal, Daniel, 7090 Braine-le-Comte (BE); Walworth, Brent, 9050 Gentbrugge (BE)
(74) Mandataire: Smith, Julian Philip Howard

(56) Documents cités:
- EP-A- 0 897 934
- GB-A- 850 002
- US-A- 3 816 383
- US-A- 4 692 501
- PATENT ABSTRACTS OF JAPAN vol. 015, no. 256 (C-0845), 28 juin 1991 (1991-06-28) & JP 03 084013 A (MITSUBISHI KASEI CORP), 9 avril 1991 (1991-04-09)

## Description

La présente invention concerne un procédé de fabrication d'une composition de polymères d'oléfines dans au moins deux réacteurs connectés en série.

L'utilisation d'au moins deux réacteurs disposés en série pour fabriquer une composition de polymères d'oléfines est connue de l'art antérieur. L'utilisation de réacteurs en série permet notamment de fixer les conditions de polymérisation dans chaque réacteur et d'obtenir ainsi une composition comprenant un mélange intime de polymères ayant des caractéristiques différentes, par exemples en termes de masse moléculaire et/ou de teneur en comonomères. Afin de pouvoir moduler ces caractéristiques, il est souhaitable de pouvoir contrôler de manière indépendante le milieu de polymérisation dans chaque réacteur et d'enlever du milieu de polymérisation soutiré du premier réacteur, les composés non souhaitables dans le réacteur de polymérisation ultérieur.

Plusieurs méthodes de traitement du milieu de polymérisation issu du premier réacteur ont déjà été décrites. Dans la demande de brevet EP-A-0897934 est décrit un procédé de préparation d'une composition de polymères dans lequel la majeure partie d'hydrogène présente dans la suspension soutirée du premier réacteur est éliminée en soumettant la suspension à une détente de pression avant de l'envoyer dans le deuxième réacteur. Le brevet US 5,639,834 décrit un procédé de préparation d'une composition de polymères dans lequel la suspension riche en comonomère formée dans le premier réacteur est prélevée de ce réacteur au moyen de jambes de décantation montées sur le réacteur, puis la suspension concentrée est envoyée au deuxième réacteur dans lequel la quantité en comonomère est réduite. Ce procédé présente toutefois des inconvénients en ce que la décharge du réacteur de manière discontinue est délicate du point de vue sécurité et fiabilité. En effet; il est connu que les vannes isolant les jambes de décantation se bloquent facilement au cours du temps. Le brevet US 4,692,501 décrit un procédé dans lequel la suspension formée dans le premier réacteur est lavée par un contre-courant de liquide dans une zone d'échange avant de l'envoyer dans le deuxième réacteur. Ce procédé présente l'inconvénient de devoir être effectué avec de grandes précautions afin d'éviter le mélange de la suspension retirée et du liquide ajouté dans la zone d'échange.

La présente invention vise à procurer un procédé qui ne présente pas les inconvénients précités.

L'invention concerne dès lors un procédé de fabrication d'une composition de polymères d'oléfines dans au moins deux réacteurs de polymérisation connectés en série, selon lequel :
(a) dans un premier réacteur de polymérisation, au moins une oléfine est polymérisée en continu en présence d'un diluant (D) et d'un catalyseur pour produire une suspension (S) comprenant ledit diluant (D) et des particules d'un polymère d'oléfine (A),
(b) une partie de la suspension (S) est prélevée du réacteur,
(c) la suspension prélevée est envoyée dans un hydrocyclone dans lequel sont formés et séparés, d'une part, un flux (F) comprenant du diluant (D), et, d'autre part, une suspension (SC) concentrée en particules de polymère (A), .
(d) le flux (F) est prélevé de l'hydrocyclone et recyclé au moins partiellement au premier réacteur de polymérisation,
(e) la suspension concentrée (SC) est prélevée de l'hydrocyclone et introduite dans un réacteur de polymérisation ultérieur, dans lequel au moins une oléfine est polymérisée pour former un polymère d'oléfine (B) et produire une suspension (S') comprenant le diluant (D) et des particules d'une composition de polymères d'oléfines comprenant le polymère (A) et le polymère (B),
(f) la suspension (S') est prélevée du réacteur de polymérisation ultérieur et les particules de la composition de polymères d'oléfines sont séparées de la suspension (S').

Par polymères d'oléfine, on entend désigner dans la présente invention, aussi bien les homopolymères d'une oléfine que les copolymères d'une oléfine avec une ou plusieurs autres oléfines ou d'autres monomères copolymérisables avec l'oléfine.

L'oléfine mise en oeuvre dans l'étape de polymérisation (a) du procédé selon l'invention est généralement choisie parmi les oléfines comprenant de 2 à 12 atomes de carbone et leurs mélanges. L'oléfine est de préférence choisie parmi les 1-oléfines comprenant de 2 à 8 atomes de carbone, plus particulièrement parmi l'éthylène, le propylène, le 1-butène, le 1-méthylpentène, le 1-hexène, le 1-octène et leurs mélanges. Il va de soi que dans l'étape (a) plusieurs oléfines peuvent être mises en oeuvre ensemble ou que d'autres monomères copolymérisables avec les oléfines peuvent être mis en oeuvre de façon à obtenir des copolymères d'oléfines. Parmi les autres monomères copolymérisables avec les oléfines, on peut citer notamment les dioléfines conjuguées ou non.

Le diluant (D) mis en oeuvre dans le procédé selon l'invention peut être tout diluant qui est liquide dans les conditions de polymérisation et dans lequel la majeure partie de polymère formé est insoluble dans les conditions de polymérisation. Des diluants appropriés sont les hydrocarbures. Les hydrocarbures aromatiques et aliphatiques cycliques comprenant de 5 à 12 atomes de carbone, tels que le toluène et le cyclohexane conviennent bien. Des diluants préférés sont les hydrocarbures aliphatiques acycliques comprenant de 3 à 8 atomes de carbone, tels que le pentane et l'hexane. Particulièrement préférés sont le propane et l'isobutane.

Selon un cas particulier, le diluant peut être l'oléfine elle-même maintenue à l'état liquide sous sa pression de saturation.

Selon un autre cas particulier, le diluant peut être maintenu sous son état supercritique.

La polymérisation effectuée à l'étape (a) du procédé selon l'invention s'effectue en présence d'un catalyseur. Tout catalyseur permettant la polymérisation d'oléfines peut être utilisé. A titre d'exemples de tels catalyseurs, on peut citer les catalyseurs du type Ziegler, les catalyseurs à base de vanadium ou de chrome, les catalyseurs métallocènes et à base de métaux de transition des groupes 8 à 12 du Tableau Périodique des Eléments. Ces catalyseurs peuvent être supportés sur un support inorganique ou polymérique.

Il va de soi que dans l'étape de polymérisation (a), outre l'(les) oléfine(s) et le diluant, d'autres composés peuvent être présents, notamment des cocatalyseurs et des agents de régulation de masse moléculaire, tel que l'hydrogène.

La polymérisation effectuée dans l'étape (a) du procédé peut se faire dans des conditions de température et de pression très variables. Généralement, la polymérisation s'effectue à une température de 20 à 150 °C, de préférence de 25 à 130 °C. Habituellement, la polymérisation s'effectue à une pression de 10⁵ à 100.10⁵ Pa, de préférence de 10.10⁵ à 55.10⁵ Pa.

Selon une variante du procédé selon l'invention, la polymérisation effectuée à l'étape (a) s'effectue dans plusieurs réacteurs de polymérisation connectés en série. Dans ce cas, la suspension (S) prélevée du dernier réacteur de polymérisation de cette série est envoyée à l'étape (b). Les suspensions issues de chaque réacteur précédant ce dernier réacteur de polymérisation peuvent être prélevées et transférées au réacteur suivant de toute manière connue. A cet effet, il peut être avantageux d'utiliser également des hydrocyclones. Dans le cas où l'étape (a) s'effectue dans plusieurs réacteurs en série, le flux (F) peut être recyclé au dernier réacteur de polymérisation. Selon une forme d'exécution avantageuse, le flux (F) est recyclé à un réacteur de polymérisation précédant le dernier réacteur.

Dans l'étape (b) du procédé selon l'invention, une partie de la suspension formée dans le réacteur à l'étape (a), est prélevée de ce réacteur. La quantité de suspension prélevée du réacteur peut varier dans de larges mesures.

Généralement, la quantité de suspension prélevée du réacteur est réglée de façon à correspondre à la production en polymère.

Outre le diluant et les particules de polymère d'oléfine (A); la suspension prélevée du réacteur peut contenir d'autres composés présents ou formés dans le réacteur de polymérisation. Généralement, la suspension comprend une quantité d'oléfine non polymérisée.

Dans l'étape (b), la suspension est de préférence prélevée en continu du réacteur de polymérisation.

Dans l'étape (c) du procédé selon l'invention, la suspension prélevée du réacteur dans l'étape (b) est envoyée dans un hydrocyclone dans lequel sont formés et séparés, d'une part une suspension (SC) concentrée en particules de polymère (A) et, d'autre part, un flux (F) comprenant du diluant (D).

Aux fins de la présente invention, on entend désigner par hydrocyclone tout appareil qui, sous l'action d'une force centrifuge, permet de séparer d'une suspension de particules solides, d'une part, un flux liquide appauvri en particules solides et, d'autre part, un flux concentré en particules solides. De tels appareils sont bien connus, ils ont notamment été décrits dans Perry's Chemical Engineers' Handbook, McGraw-Hill 7^{th} Edition, 1997, pages 19-24 à 19-28. Il va de soi que dans le procédé selon l'invention plusieurs hydrocyclones peuvent être montés en série.

Les valeurs de pression et de température dans l'hydrocyclone sont généralement réglées de façon à ce que la majeure partie du diluant présent reste sous forme liquide. De préférence, la pression et la température sont de l'ordre de grandeur de celles régnant dans le réacteur de polymérisation.

Selon une forme d'exécution particulière du procédé selon l'invention, la suspension prélevée à l'étape (b) est diluée, dans l'étape (c), au moyen d'un liquide (L) avant de l'introduire dans l'hydrocyclone. Dans la présente invention, on entend désigner par liquide (L), tout composé qui est liquide dans les conditions de pression et de température utilisées dans le réacteur de polymérisation et dans lequel la majeure partie de polymère d'oléfine (A) formé est insoluble dans ces conditions de polymérisation. Avantageusement, le liquide (L) est constitué essentiellement de diluant (D). Dans ce cas, le diluant ajouté en tant que liquide (L) peut être du diluant frais, n'ayant encore jamais servi pour la polymérisation ou du diluant récupéré et épuré. Par diluant récupéré et épuré, on entend désigner du diluant qui a déjà servi pour la polymérisation, mais qui est épuré afin d'en séparer la majeure partie des composés présents ou formés lors de la polymérisation, tels que les particules de polymère et l'oléfine, de façon à ce qu'il présente une pureté suffisante pour être réutilisé dans le procédé.

La quantité de diluant ajoutée en tant que liquide (L) dans cette première forme d'exécution du procédé peut varier dans des larges mesures.

Généralement, la quantité de diluant ajoutée à la suspension est d'au moins 0,11, de préférence d'au moins 0,5 1, par kg de particules de polymère (A) présentes dans la suspension (S) prélevée du réacteur. La quantité de diluant ajoutée ne dépasse généralement pas 5 1, de préférence pas 3 1, par kg de particules de polymère (A) présentes dans la suspension (S) prélevée du réacteur.

Cette forme d'exécution du procédé présente l'avantage de diminuer davantage la quantité de composés présents ou formés dans le premier réacteur qui est envoyée dans le réacteur de polymérisation ultérieur.

La suspension concentrée (SC) formée dans l'étape (c) du procédé selon l'invention comprend, outre les constituants de la suspension prélevée du réacteur de polymérisation, optionnellement le liquide (L).

Dans l'étape (d) du procédé selon l'invention, le flux (F) est prélevé de l'hydrocyclone et recyclé au moins partiellement au réacteur de polymérisation.

Généralement, la totalité du flux (F) est recyclée au réacteur. Selon une variante du procédé selon l'invention, une partie du flux (F) peut être utilisée pour diluer la suspension (S) prélevée dans l'étape (b) du procédé. Dans ce cas, le solde du flux (F) est recyclé au réacteur. Le flux (F) peut comprendre, outre le diluant et, optionnellement le liquide (L), d'autres composés présents ou formés dans le réacteur de polymérisation. Généralement, le flux (F) comprend des composés présents ou formés dans le réacteur qui sont solubles dans le diluant. Le flux (F) comprend le plus souvent de l'oléfine. Le flux (F) peut également comprendre des composés présents ou formés dans le réacteur qui ne sont pas solubles dans le diluant, tels que par exemple de fines particules de polymère.

Dans l'étape (e) du procédé selon l'invention, la suspension concentrée (SC) est prélevée de l'hydrocyclone et envoyée dans un réacteur de polymérisation ultérieur dans lequel au moins une oléfine est polymérisée pour former un polymère d'oléfine (B).

Selon une forme d'exécution particulière du procédé selon l'invention, dans l'étape (e), la suspension concentrée (SC) prélevée de l'hydrocyclone est d'abord soumise à une détente avant de l'introduire dans le réacteur de polymérisation ultérieur. Cette forme d'exécution du procédé est particulièrement avantageuse lorsque la suspension concentrée (SC) comprend de l'hydrogène.

Lors de la détente, une partie au moins de l'hydrogène présent dans la suspension concentrée est éliminée. Il va de soi que lors de la détente, d'autres composants de la suspension concentrée (SC), tel que 1' (les) oléfine(s), peuvent également être éliminés partiellement. Généralement, une partie du diluant est également vaporisée.

Le détente est avantageusement effectuée à une température inférieure ou égale à la température de polymérisation dans le premier réacteur. La température à laquelle est effectuée la détente est habituellement supérieure à 20 °C, elle est de préférence d'au moins 40 °C. La pression à laquelle est effectuée la détente est inférieure à la pression dans le premier réacteur. La pression de détente est de préférence inférieure à 15.10⁵ Pa. La pression de détente est habituellement d'au moins 1.10⁵ Pa.

Cette forme d'exécution du procédé présente l'avantage que la quantité d'hydrogène introduite dans le réacteur de polymérisation ultérieur via la suspension concentrée (SC) est faible, voire nulle. De cette façon, il est possible de contrôler de manière plus précise la quantité d'hydrogène dans le réacteur de polymérisation ultérieur et dès lors la masse moléculaire du polymère (B).

L'oléfine mise en oeuvre dans l'étape de polymérisation (e) du procédé selon l'invention est généralement choisie parmi les oléfines comprenant de 2 à 12 atomes de carbone et leurs mélanges. L'oléfine est de préférence choisie parmi les 1-oléfines comprenant de 2 à 8 atomes de carbone, plus particulièrement parmi l'éthylène, le propylène, le 1-butène, le 1-méthylpentène, le 1-hexène, le 1-octène et leurs mélanges. Il va de soi que dans l'étape (e) plusieurs oléfines peuvent être mises en oeuvre ensemble ou que d'autres monomères copolymérisables avec les oléfines peuvent être mis en oeuvre de façon à obtenir des copolymères d'oléfines. Parmi les autres monomères copolymérisables avec les oléfines, on peut citer notamment les dioléfines conjuguées ou non.

La polymérisation effectuée dans l'étape (e) du procédé peut se faire dans des conditions de température et de pression très variables. Généralement, la polymérisation s'effectue à une température de 20 à 150 °C, de préférence de 25 à 130 °C. Habituellement, la polymérisation s'effectue à une pression de 10⁵ à 100.10⁵ Pa, de préférence de 10.10⁵ à 55.10⁵ Pa.

Il peut être avantageux de rajouter dans le réacteur de polymérisation ultérieur une quantité supplémentaire de diluant (D) tel que défini ci-dessus.

Selon une variante du procédé selon l'invention, cette quantité de diluant est ajoutée à la suspension concentrée avant son entrée dans le réacteur de polymérisation ultérieur. De manière avantageuse, cette quantité de diluant est ajoutée à la suspension concentrée lors de la détente.

Il va de soi que dans l'étape de polymérisation (e), outre l'(les) oléfine(s) et le diluant, d'autres composés peuvent être présents, notamment des cocatalyseurs et des agents de régulation de masse moléculaire, tel que l'hydrogène.

Selon une variante du procédé selon l'invention, la polymérisation effectuée à l'étape (e) s'effectue dans plusieurs réacteurs de polymérisation connectés en série.

A l'issue de l'étape (e) du procédé selon l'invention, une suspension (S') comprenant du diluant (D) et des particules d'une composition de polymères d'oléfines comprenant le polymère (A) et le polymère (B) est obtenue. Le polymère (B) ayant été préparé en présence du polymère(A), la composition de polymères d'oléfines peut se caractériser comme étant un mélange intime et homogène des deux polymères au sein de chaque particule.

Les quantités respectives de polymères d'oléfine fabriquées dans les étapes (a) et (e) du procédé selon l'invention peuvent varier dans de larges mesures. Généralement la quantité de polymère d'oléfine (A) fabriquée dans l'étape (a) du procédé est comprise entre 20 et 80 % en poids, de préférence entre 30 et 70 % en poids, de la quantité totale de polymères d'oléfine produits dans le procédé selon l'invention. Généralement la quantité de polymère d'oléfine (B) fabriquée dans l'étape (e) du procédé est comprise entre 20 et 80 % en poids, de préférence entre 30 et 70 % en poids, de la quantité totale de polymères d'oléfine produits dans le procédé selon l'invention.

Dans l'étape (f) du procédé selon l'invention, la suspension (S') est prélevée du réacteur et les particules de la composition de polymères d'oléfines sont séparées de la suspension (S'). Le prélèvement de la suspension (S') du réacteur peut se faire par tout moyen connu, notamment en utilisant un hydrocyclone.

La séparation des particules de la composition de polymères d'oléfines peut se faire par toute méthode connue. Les particules de polymère sont généralement séparées de la majeure partie du diluant en soumettant la suspension (S') issue de l'étape (e) du procédé selon l'invention à un traitement sous des conditions de pression et de température aptes à vaporiser au moins une partie du diluant. Les particules de polymère ne contenant plus qu'une faible quantité de diluant résiduaire peuvent ensuite être séchées par tout moyen connu, par exemple par chauffage dans un sécheur.

Selon une première variante de l'étape (f) du procédé selon l'invention, la suspension (S') est soumise à une détente à une pression inférieure à 5.10⁵ Pa. Le diluant vaporisé peut ensuite être recondensé par compression en vue de sa réutilisation dans le procédé selon l'invention. Avant sa réutilisation, le diluant est habituellement soumis à une épuration de façon à enlever la majeure partie d'oléfine et éventuellement les autres composés présents. Après épuration, le diluant peut être réutilisé aux étapes (a), (c) et/ou (e) du procédé selon l'invention.

Selon une deuxième variante de l'étape (f) du procédé selon l'invention, la suspension (S') est soumise à une détente sous des conditions de température et de pression qui assurent la vaporisation de la majeure partie du diluant, mais qui sont telles que le refroidissement ultérieur du diluant vaporisé à une température inférieure ou égale à 60 °C permet sa recondensation sans devoir le' comprimer. La température à laquelle est effectuée la détente est généralement comprise entre 50 et 90 °C. Afin de régler la température à laquelle est effectuée la détente, il peut être avantageux de chauffer la suspension (S') prélevée du réacteur au moyen d'un chauffage en ligne. La pression à laquelle est effectuée la détente est généralement comprise entre 5.10⁵ et 20.10⁵ Pa. Cette variante du procédé présente l'avantage que le diluant ainsi séparé des particules de polymère peut être recondensé par simple refroidissement sans étape de compression et être réutilisé à l'étape (a), (c) et/ou (e) du procédé selon l'invention. Cette deuxième variante de l'étape (f) du procédé est très avantageuse quand on utilise un diluant qui présente une température d'ébullition sous pression atmosphérique qui est inférieure à environ 25 °C.

Le procédé selon l'invention présente l'avantage qu'il permet de mieux contrôler, de manière indépendante, le milieu de polymérisation dans chaque réacteur d'une série de réacteurs disposées en série. Le procédé selon l'invention permet, selon une manière simple et efficace, d'enlever du milieu de polymérisation soutiré du premier réacteur une partie des composés non souhaitables dans le réacteur ultérieur. De plus, le procédé selon l'invention permet de diminuer considérablement les quantités des composés à enlever du milieu de polymérisation avant de pouvoir l'introduire dans le réacteur de polymérisation ultérieur. De cette façon, la quantité de ces composés à traiter est fortement réduite.

Le procédé selon l'invention présente en outre l'avantage qu'il permet d'obtenir des polymères ayant une distribution plus étroite de la taille de leurs particules, ainsi qu'une homogénéité accrue de leurs propriétés rhéologiques.

Le procédé selon l'invention est applicable à l'obtention d'une composition de polymères d'oléfines, et plus spécialement de polymères d'éthylène. Le procédé convient bien à l'obtention d'une composition de polymères d'éthylène comprenant un polymère (A) et un polymère (B) ayant une teneur en comonomère et une masse moléculaire différentes. Le procédé est particulièrement bien adapté pour l'obtention d'une composition comprenant, comme polymère (A), un homopolymère d'éthylène et, comme polymère (B), un copolymère d'éthylène comprenant de 0,4 à 10 % en poids de butène et/ou de l'hexène. Le procédé est également bien adapté pour l'obtention d'une composition comprenant, comme polymère (A), un copolymère d'éthylène comprenant de 0,4 à 10 % en poids de butène et/ou de l'hexène et, comme polymère (B), un polymère d'éthylène comprenant moins que 0,4 % en poids de butène et/ou de l'hexène.

Comme réacteur de polymérisation, on peut utiliser tout réacteur fonctionnant en continu, tels que des réacteurs de type cuve agitée ou des réacteurs de type boucle. De bons résultats ont été obtenus avec des réacteurs boucles.

Dans le procédé selon l'invention, le flux (F) peut être prélevé de l'hydrocyclone et recyclé au réacteur en bénéficiant d'une différence de pression régnant dans le réacteur de polymérisation. Plus particulièrement, quand le réacteur de polymérisation est un réacteur du type boucle, la suspension (S) peut être prélevée du réacteur et le flux (F) peut être recyclé au réacteur en bénéficiant de la différence de pression régnant en aval et en amont du système d'agitation du réacteur boucle. Il est toutefois préféré de prélever le flux (F) de l'hydrocyclone en créant une différence de pression en amont et en aval de l'hydrocyclone au moyen d'une pompe de circulation. La pompe est de préférence montée sur le circuit de recyclage du flux (F) au réacteur.

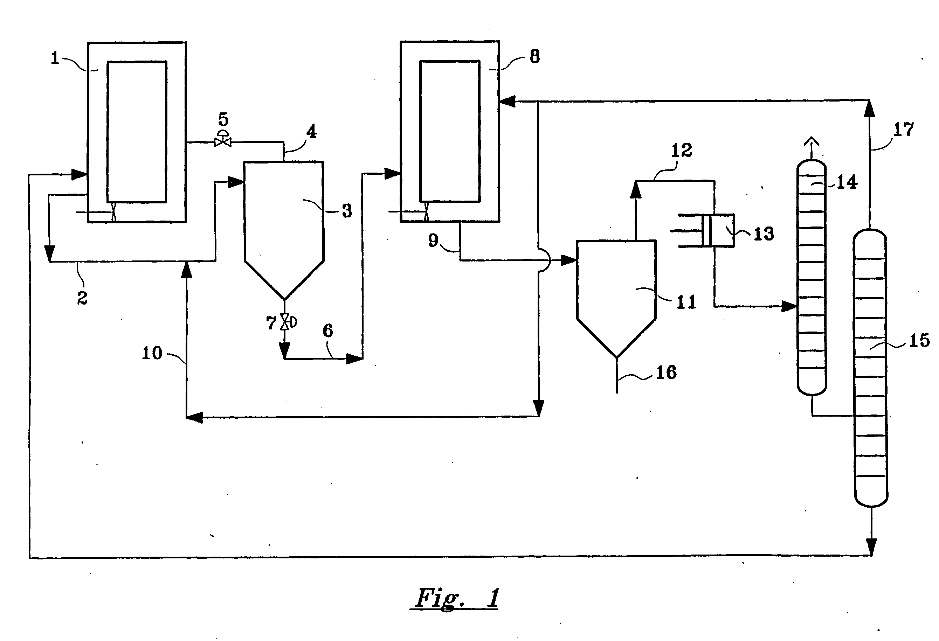

Les figures 1 à 3 montrent schématiquement un dispositif utilisable pour la réalisation du procédé selon l'invention. Dans les schémas des figures 1 à 3, une partie de la suspension comprenant des particules de polymère et du diluant formée dans le réacteur de polymérisation 1 est prélevée par la tubulure 2 et envoyée dans l'hydrocyclone 3 dans lequel sont formés, d'une part, une suspension concentrée en particules de polymère qui est prélevée de l'hydrocyclone 3 par la vanne 7 montée sur la tubulure 6, et d'autre part un flux (F) enrichi en diluant. Ce flux (F) enrichi en diluant est prélevé de l'hydrocyclone 3 par la tubulure 4 et recyclé au réacteur de polymérisation 1.

L'ouverture de la vanne de réglage 5 montée sur la tubulure 4 permet de conditionner le degré d'épaississement de la suspension concentrée. La régulation de la quantité du flux (F) recyclée au réacteur permet de régler la concentration en particules de polymère présentes dans le réacteur de polymérisation. Il est dès lors possible de travailler à des concentrations en polymère relativement faibles dans le réacteur de polymérisation tout en maintenant une concentration élevée en polymère à la sortie du procédé.

Dans le schéma de la figure 1, la suspension prélevée du réacteur de polymérisation 1 est diluée par la conduite 10 au moyen de diluant recyclé avant de l'envoyer à l'hydrocyclone 3. La suspension concentrée prélevée de l'hydrocyclone 3 via la tubulure 6 est envoyée dans le réacteur de polymérisation 8. La suspension comprenant des particules de polymères formées dans les réacteurs 1 et 8 et du diluant, prélevée du réacteur 8 par la tubulure 9 est envoyée dans une cuve 11 maintenue sous une pression inférieure à celle régnant dans le réacteur 8 (généralement inférieure à 5.10⁵ Pa) de façon à y vaporiser la majeure partie du diluant. Le diluant vaporisé est ensuite envoyé par la conduite 12 à un compresseur 13 de façon à le condenser par compression. Le diluant ainsi condensé est ensuite envoyé aux colonnes de distillation 14 et 15 de façon à l'épurer. Le diluant fortement appauvri en monomère est ensuite réutilisé en tant que diluant dans le réacteur de polymérisation 8 et pour la dilution de la suspension prélevée du réacteur 1 (via les tubulures 17 et 10). Le diluant comprenant éventuellement encore une quantité de monomère lourd est ensuite réutilisé en tant que diluant dans le réacteur de polymérisation 1. Les particules de la composition de polymères sont prélevées par la tubulure 16.

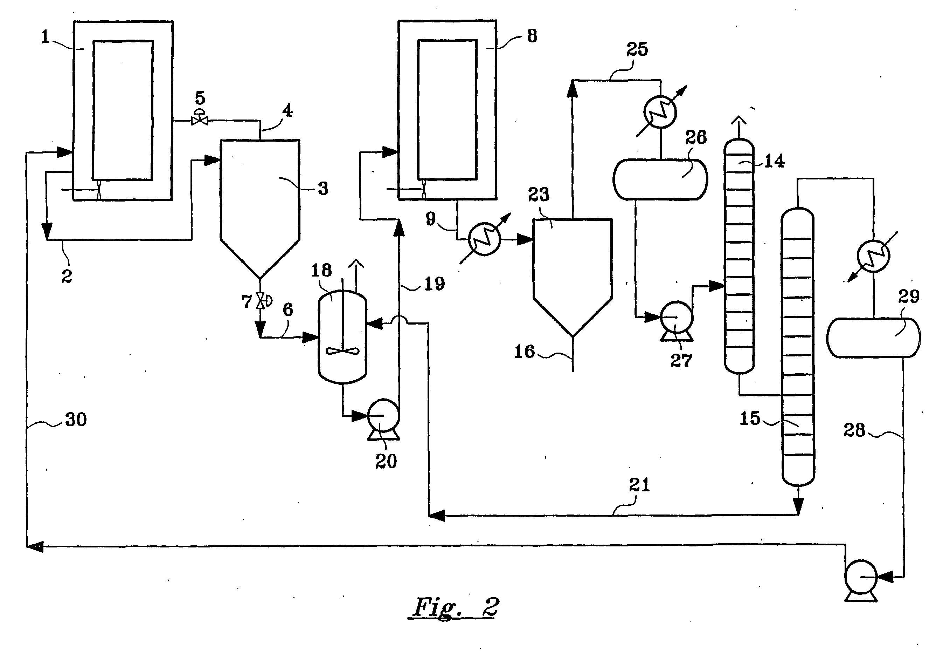

Dans le schéma de la figure 2, la suspension prélevée du réacteur de polymérisation 1 est envoyée à l'hydrocyclone 3. La suspension concentrée prélevée de l'hydrocyclone 3 via la tubulure 6 est envoyée dans une cuve de détente 18 maintenue sous une pression inférieure à celle régnant dans l'hydrocyclone (généralement de l'ordre de 1.10⁵ à 15.10⁵ Pa). La suspension concentrée est diluée dans la cuve de détente 18 au moyen de diluant recyclé via la conduite 21. La suspension est ensuite prélevée de la cuve de détente 18 par la tubulure 19 au moyen d'une pompe 20 et introduite dans le réacteur de polymérisation 8. La suspension comprenant des particules de la composition de polymères formés dans les réacteurs 1 et 8 et du diluant, prélevée du réacteur 8 par la tubulure 9 est envoyée dans une cuve 23 maintenue sous une pression inférieure à celle régnant dans le réacteur 8 (généralement de l'ordre de 5.10⁵ à 15.10⁵ Pa) de façon à y vaporiser la majeure partie du diluant. A cet effet, la tubulure 9 peut éventuellement être munie d'un dispositif de chauffage de conduite. Le diluant vaporisé est ensuite envoyé par la conduite 25 munie d'un échangeur de chaleur à une cuve 26 de façon à le condenser par simple refroidissement. Le diluant condensé est ensuite envoyé via la pompe 27 aux colonnes de distillation 14 et 15 de façon à l'épurer. Le diluant fortement appauvri en monomère est ensuite recondensé par refroidissement dans la cuve 29 et réutilisé au réacteur de polymérisation 1 (via les tubulures 28 et 30). Le diluant comprenant éventuellement encore une quantité de monomère lourd est ensuite recyclé dans la cuve de détente 18 via la tubulure 21. Les particules de polymères sont prélevées par la tubulure 16.

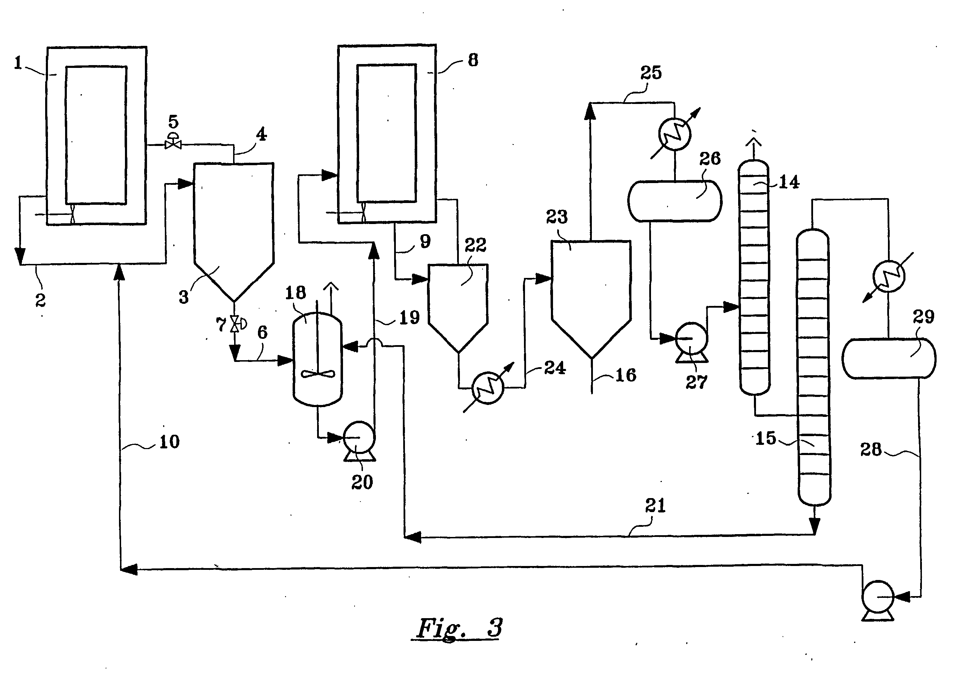

Dans le schéma de la figure 3, la suspension prélevée du réacteur de polymérisation 1 est diluée par la conduite 10 au moyen de diluant recyclé avant de l'envoyer à l'hydrocyclone 3. La suspension concentrée prélevée de l'hydrocyclone 3 via la tubulure 6 est envoyée dans une cuve de détente 18 maintenue sous une pression inférieure à celle régnant dans l'hydrocyclone (généralement de l'ordre de 1.10⁵ à 15.10⁵ Pa). La suspension concentrée est diluée au moyen de diluant recyclé via la conduite 21 et prélevée de la cuve de détente 18 par la tubulure 19 au moyen d'une pompe 20, puis introduite dans le réacteur de polymérisation 8. La suspension comprenant des particules de la composition de polymères formés dans les réacteurs 1 et 8 et du diluant, prélevée du réacteur 8 par la tubulure 9 est concentrée dans un hydrocyclone 22, puis envoyée - via la tubulure 24 - dans une cuve 23 maintenue sous une pression inférieure à celle régnant dans l'hydrocyclone 22 (généralement de l'ordre de 5.10⁵ à 15.10⁵ Pa) de façon à y vaporiser la majeure partie du diluant. A cet effet, la tubulure 24 peut éventuellement être munie d'un dispositif de chauffage de conduite. Le diluant vaporisé est ensuite envoyé par la conduite 25 munie d'un échangeur de chaleur à une cuve 26 de façon à le condenser par simple refroidissement. Le diluant condensé est ensuite envoyé via la pompe 27 aux colonnes de distillation 14 et 15 de façon à l'épurer. Le diluant fortement appauvri en monomère est ensuite recondensé par refroidissement dans la cuve 29 et réutilisé en tant que diluant pour la dilution de la suspension prélevée du réacteur 1 (via les tubulures 10 et 28). Le diluant comprenant éventuellement encore une quantité de monomère lourd est ensuite recyclé dans la cuve de détente 18 via la tubulure 21. Les particules de polymères sont prélevées par la tubulure 16.

### Exemple 1

Un essai de polymérisation a été effectué avec le procédé selon l'invention et dans le dispositif décrit à la figure 1. De l'éthylène et de l'hexène ont été polymérisés en continu dans le réacteur boucle 1 chargé d'isobutane, au moyen d'un catalyseur du type Ziegler tel que décrit dans la demande de brevet EP-A-0897934, de façon à former une suspension comprenant de l'ordre de 49 % en poids de particules de copolymère éthylène-hexène. La température dans le réacteur 1 était de l'ordre de 75°C; la pression était de l'ordre de 40.10⁵ Pa. Le réacteur a été alimenté en continu en éthylène et en hexène à un débit de, respectivement, 10 et 1 tonnes/h. Une partie de la suspension de particules de copolymère formée dans le réacteur 1 a été prélevée en continu du réacteur 1 par la tubulure 2 à un débit de 20,5 tonnes/h. Cette suspension a été diluée en continu avec de l'isobutane recyclé de la colonne de distillation 15 (via les tubulures 17 et 10) à un débit de 6 tonnes/h. La suspension ainsi diluée comprenait environ 38 % en poids de particules de copolymère. Elle a été envoyée en continu dans l'hydrocyclone 3. Le fonctionnement de l'hydrocyclone a été réglé au moyen des vannes de réglage 5 et 7 de façon à obtenir un flux (F) sortant de l'hydrocyclone par la tubulure 4 à un débit de 9,3 tonnes/h et une suspension concentrée sortant de l'hydrocyclone par la tubulure 6 à un débit de 17,2 tonnes/h. Le flux (F) a été recyclé intégralement au réacteur de polymérisation 1; il comprenait essentiellement de l'isobutane et de l'hexène (3 % en poids). La suspension concentrée comprenait 58 % en poids de particules de copolymère. La suspension concentrée a été introduite dans un réacteur boucle 8. Le réacteur boucle a été alimenté en continu en éthylène et en isobutane recyclé de la colonne de distillation 15 (via la tubulure 17) à un débit de, respectivement, 10 et 13 tonnes/h. La concentration en hexène dans le réacteur 8 était d'environ 0,5 % en poids. La température dans le réacteur 8 était de l'ordre de 85°C; la pression était de l'ordre de 39.10⁵ Pa. Une partie de la suspension de particules de la composition de polymères formée a été prélevée en continu du réacteur 8 par la tubulure 9 à un débit de 40,6 tonnes/h. Cette suspension comprenait de l'ordre de 49 % en poids de particules d'une composition comprenant un copolymère éthylène-hexène et un polymère d'éthylène. Pour une production horaire de 20 tonnes de polymère, les quantités d'isobutane, d'éthylène et d'hexène à séparer des particules de polymère et à traiter afin de leur réutilisation étaient, respectivement, d'environ 20 tonnes/heure, 0,5 et 0,1 tonnes/heure.

### Exemple 2 (non conforme à l'invention)

Le procédé décrit dans l'exemple 1 a été reproduit sauf que le passage dans l'hydrocyclone 3 a été omis. La suspension prélevée du réacteur de polymérisation 1 comprenant environ 49 % en poids de particules de copolymère a été envoyée directement dans le réacteur de polymérisation 8. La concentration en hexène dans le réacteur 8 était d'environ 1,2 % en poids. Une partie de la suspension de particules de la composition de polymères a été prélevée en continu du réacteur 8 par la tubulure 9 à un débit de 40,75 tonnes/h. Cette suspension comprenait de l'ordre de 49 % en poids de particules d'une composition comprenant un copolymère éthylène-hexène et un polymère d'éthylène. Pour une production horaire de 20 tonnes de polymère, les quantités d'isobutane, d'éthylène et d'hexène à séparer des particules de polymère et à traiter afin de leur réutilisation étaient, respectivement, d'environ 20 tonnes/heure, 0,5 et 0,25 tonnes/heure.

La comparaison des exemples 1 et 2 montre que le procédé selon l'invention permet d'obtenir une suspension concentrée en particules de polymère ayant une teneur fortement réduite en hexène. De cette façon la quantité d'hexène introduite dans le réacteur de polymérisation ultérieur est fortement réduite et permet dès lors d'obtenir dans ce deuxième réacteur un polymère d'éthylène pauvre en hexène. De même, la quantité d'hexène à séparer ultérieurement des particules de polymère et du diluant est fortement réduite.

### Exemple 3

Un essai de polymérisation a été effectué avec le procédé selon l'invention et dans le dispositif décrit à la figure 2. De l'éthylène a été polymérisé en continu dans le réacteur boucle 1 chargé d'isobutane, au moyen d'un catalyseur du type Ziegler tel que dans l'exemple 1, de façon à former une suspension comprenant de l'ordre de 50 % en poids de particules d'homopolymère d'éthylène. La température dans le réacteur était de l'ordre de 85°C; la pression était de l'ordre de 40.10⁵ Pa. Le réacteur a été alimenté en continu en éthylène et en hydrogène, à des débits de, respectivement, 10 et 0,025 tonnes/h. Une partie de la suspension de particules de polymère formée dans le réacteur 1 a été prélevée en continu du réacteur 1 par la tubulure 2 à un débit d'environ 20 tonnes/h. Elle a été envoyée en continu dans l'hydrocyclone 3.

Le fonctionnement de l'hydrocyclone a été réglé au moyen des vannes de réglage 5 et 7 de façon à obtenir un flux (F) sortant de l'hydrocyclone par la tubulure 4 à un débit de 3 tonnes/h et une suspension concentrée sortant de l'hydrocyclone par la tubulure 6 à un débit de 17,162 tonnes/h. La suspension comprenait, pour 10 tonnes de polymère, 7 tonnes d'isobutane, 2,2 kg d'hydrogène et 160 kg d'éthylène. Le flux (F) a été recyclé intégralement au réacteur de polymérisation 1; il comprenait essentiellement de l'isobutane. La suspension concentrée comprenait 58 % en poids de particules de polymère. La suspension concentrée a été introduite dans la cuve de détente 18 dans laquelle la pression était de l'ordre de 10.10⁵ Pa. De l'isobutane recyclé de la colonne de distillation 15 (via la tubulure 21) a été introduit dans la cuve de détente à un débit de 13 tonnes/h. La suspension soutirée de la cuve de détente 18 au moyen de la pompe 20 était dégazée et libérée de la quasi-totalité de l'hydrogène et de l'éthylène y présent. La suspension dégazée a ensuite été introduite dans le réacteur boucle 8 via la pompe 20 et la tubulure 19. Le réacteur boucle 8 a été alimenté en continu en éthylène et en hexène à un débit de, respectivement, 10 et 0,56 tonnes/h. Une partie de la suspension de particules de la composition de polymères a été prélevée en continu du réacteur 8 par la tubulure 9 à un débit de 42 tonnes/h. Cette suspension comprenait de l'ordre de 50 % en poids de particules d'une composition comprenant un homopolymère d'éthylène et un copolymère éthylène-hexène. Pour une production horaire de 20 tonnes de polymère, les quantités d'isobutane et d'éthylène à séparer des particules de polymère et à traiter afin de leur réutilisation étaient, respectivement, d'environ 20 et 0,5 tonnes/heure. Pour une production horaire de 20 tonnes de polymère, les quantités d'éthylène et d'hydrogène sortant de la cuve de détente était de, respectivement, 160 et 2,2 kg/h.

### Exemple 4 (non conforme à l'invention)

Le procédé décrit dans l'exemple 3 a été reproduit sauf que le passage dans l'hydrocyclone 3 a été omis.

Une partie de la suspension de particules de polymère formée dans le réacteur 1 a été prélevée en continu du réacteur 1 par la tubulure 2 à un débit d'environ 20 tonnes/h. La suspension comprenant 10 tonnes de polymère, 10 tonnes d'isobutane, 3,2 kg d'hydrogène et 225 kg d'éthylène a été introduite dans la cuve de détente 18 dans laquelle la pression était de l'ordre de 10.10⁵ Pa. De l'isobutane recyclé de la colonne de distillation 15 (via la tubulure 21) a été introduit dans la cuve de détente à un débit de 10 tonnes/h. La suspension soutirée de la cuve de détente 18 au moyen de la pompe 20 était dégazée et libérée de la quasi-totalité de l'hydrogène et de l'éthylène y présent.

Pour une production horaire de 20 tonnes de polymère, les quantités d'éthylène et d'hydrogène sortant de la cuve de détente était de, respectivement, 225 et 3,2 kg/h.

### Exemple 5

Un essai de polymérisation a été effectué avec le procédé selon l'invention et dans le dispositif décrit à la figure 3. De l'éthylène à été polymérisé en continu dans le réacteur boucle 1 chargé d'isobutane, au moyen d'un catalyseur du type Ziegler tel que dans l'exemple 1, de façon à former une suspension comprenant de l'ordre de 50 % en poids de particules d'homopolymère d'éthylène. La température dans le réacteur était de l'ordre de 85°C; la pression était de l'ordre de 40.10⁵ Pa. Le réacteur a été alimenté en continu en éthylène et en hydrogène, à des débits de, respectivement, 10 et 0,025 tonnes/h. Une partie de la suspension de particules de polymère formée dans le réacteur 1 a été prélevée en continu du réacteur 1 par la tubulure 2 à un débit d'environ 20 tonnes/h. Elle a été diluée au moyen d'isobutane recyclé provenant de la colonne de distillation 15 via la tubulure 10 à un débit de 7 tonnes/h. La suspension ainsi diluée a été envoyée en continu dans l'hydrocyclone 3. Le fonctionnement de l'hydrocyclone a été réglé au moyen des vannes de réglage 5 et 7 de façon à obtenir un flux (F) sortant de l'hydrocyclone par la tubulure 4 à un débit de 10 tonnes/h et une suspension concentrée sortant de l'hydrocyclone par la tubulure 6 à un débit de 17,091 tonnes/h. La suspension concentrée comprenait, pour 10 tonnes de polymère, 7 tonnes d'isobutane, 1,3 kg d'hydrogène et 90 kg d'éthylène. Le flux (F) a été recyclé intégralement au réacteur de polymérisation 1; il comprenait essentiellement de l'isobutane. La suspension concentrée comprenait 59 % en poids de particules de polymère. La suspension concentrée a été introduite dans la cuve de détente 18 dans laquelle la pression était de l'ordre de 10.10⁵ Pa. De l'isobutane recyclé de la colonne de distillation 15 (via la tubulure 21) a été introduit dans la cuve de détente à un débit de 7 tonnes/h. La suspension soutirée de la cuve de détente 18 au moyen de la pompe 20 était dégazée et libérée de la quasi-totalité de l'hydrogène et de l'éthylène y présent. La suspension dégazée a ensuite été introduite dans le réacteur boucle 8 via la pompe 20 et la tubulure 19. Le réacteur boucle 8 a été alimenté en continu en éthylène et en hexène à un débit de, respectivement, 10 et 0,56 tonnes/h. Une partie de la suspension de particules de polymères a été prélevée en continu du réacteur 8 par la tubulure 9 à un débit de 42 tonnes/h.

Cette suspension a été concentrée dans l'hydrocyclone 22. La suspension concentrée comprenait de l'ordre de 59 % en poids de particules d'une composition comprenant un homopolymère d'éthylène et un copolymère éthylène-hexène. Pour une production horaire de 20 tonnes de polymère, les quantités d'isobutane et d'éthylène à séparer des particules de polymère et à traiter afin de leur réutilisation étaient, respectivement, d'environ 14 et 0,35 tonnes/heure. Pour une production horaire de 20 tonnes de polymère, les quantités d'éthylène et d'hydrogène sortant de la cuve de détente était de, respectivement, 90 et 1,3 kg/h.

La comparaison des exemples 3, 4 et 5 montre que, pour une même productivité horaire en polymère, le procédé selon l'invention permet de diminuer considérablement les quantités d'hydrogène et d'éthylène à séparer des particules de polymère sortant du premier réacteur et à traiter en vue de leur réutilisation dans le procédé.

## Revendications

1. Procédé de fabrication d'une composition de polymères d'oléfines dans au moins deux réacteurs de polymérisation connectés en série, selon lequel :
(a) dans un premier réacteur de polymérisation, au moins une oléfine est polymérisée en continu en présence d'un diluant (D) et d'un catalyseur pour produire une suspension (S) comprenant ledit diluant (D) et des particules d'un polymère d'oléfine (A),
(b) une partie de la suspension (S) est prélevée du réacteur,
(c) la suspension prélevée est envoyée dans un hydrocyclone dans lequel sont formés et séparés, d'une part, un flux (F) comprenant du diluant (D), et, d'autre part, une suspension (SC) concentrée en particules de polymère (A),
(d) le flux (F) est prélevé de l'hydrocyclone et recyclé au moins partiellement au premier réacteur de polymérisation,
(e) la suspension concentrée (SC) est prélevée de l'hydrocyclone et introduite dans un réacteur de polymérisation ultérieur, dans lequel au moins une oléfine est polymérisée pour former un polymère d'oléfine (B) et produire une suspension (S') comprenant le diluant (D) et des particules d'une composition de polymères d'oléfines comprenant le polymère (A) et le polymère (B),
(f) la suspension (S') est prélevée du réacteur de polymérisation ultérieur et les particules de la composition de polymères d'oléfines sont séparées de la suspension (S').

2. Procédé selon la revendication 1, **caractérisé en ce que**, dans l'étape (c), la suspension (S) est diluée au moyen d'un liquide (L) avant de l'introduire dans l'hydrocyclone.

3. Procédé selon la revendication 2, **caractérisé en ce que** le liquide (L) est constitué de diluant (D).

4. Procédé selon l'une quelconque des revendications 1 à 3, **caractérisé en ce que** le diluant (D) est un hydrocarbure aliphatique acyclique comprenant de 3 à 8 atomes de carbone.

5. Procédé selon la revendication 4, **caractérisé en ce que** le diluant (D) est de l'isobutane ou du propane.

6. Procédé selon l'une quelconque des revendications 1 à 5, **caractérisé en ce que**, dans l'étape (e), la suspension concentrée (SC) prélevée de l'hydrocyclone est d'abord soumise à une détente avant de l'introduire dans le réacteur de polymérisation ultérieur.

7. Procédé selon l'une quelconque des revendications 1 à 6, **caractérisé en ce que**, dans l'étape (f), la suspension (S') issue de l'étape (e) est soumise à un traitement sous des conditions de pression et de température qui assurent la vaporisation d'au moins une partie du diluant (D).

8. Procédé selon la revendication 7, **caractérisé en ce que** le diluant (D) est vaporisé dans des conditions de pression et de température telles que le refroidissement ultérieur du diluant à une température inférieure ou égale à 60 °C permet sa recondensation sans compression.

9. Procédé selon l'une quelconque des revendications 1 à 8, **caractérisé en ce que** le procédé est appliqué à la l'obtention d'une composition comprenant un polymère d'éthylène (A) et un polymère d'éthylène (B) ayant une teneur en comonomère et une masse moléculaire différentes.

10. Procédé selon la revendication 9, **caractérisé en ce que** le polymère (A) est un homopolymère d'éthylène et **en ce que** le polymère (B) est un copolymère de l'éthylène comprenant de 0,4 à 10 % en poids de butène et/ou de l'hexène.

11. Procédé selon la revendication 9, **caractérisé en ce que** le polymère (A) est un copolymère d'éthylène comprenant de 0,4 à 10 % en poids de butène et/ou de l'hexène et **en ce que** le polymère (B) est un polymère de l'éthylène comprenant moins que 0,4 % en poids de butène et/ou de l'hexène.

## Claims

1. Process for preparing a composition of olefin polymers in at least two polymerisation reactors connected in series, according to which:
(a) in a first polymerisation reactor at least one olefin is polymerised continuously in the presence of a diluent (D) and a catalyst, in order to produce a suspension (S) containing said diluent (D) and particles of an olefin polymer (A),
(b) a part of the suspension (S) is drawn off from the reactor,
(c) the drawn-off suspension is sent into a cyclone washer in which are formed and separated, on the one hand, a flux (F) containing some diluent (D) and, on the other, a concentrated suspension (CS) of polymer particles (A),
(d) the flux (F) is drawn off from the cyclone washer and recycled at least partially to the first polymerisation reactor,
(e) the concentrated suspension (CS) is drawn off from the cyclone washer and introduced into a subsequent polymerisation reactor, in which at least one olefin is polymerised in order to form an olefin polymer (B) and to produce a suspension (S') containing the diluent (D) and particles of a composition of olefin polymers containing the polymer (A) and the polymer (B),
(f) the suspension (S') is drawn off from the subsequent polymerisation reactor and the particles of the composition of olefin polymers are separated from the suspension (S').

2. Process according to claim 1, **characterised in that**, in step (c), the suspension (S) is diluted by means of a liquid (L) before being introduced into the cyclone washer.

3. Process according to claim 2, **characterised in that** the liquid (L) is composed of diluent (D).

4. Process according to any one of claims 1 to 3, **characterised in that** the diluent (D) is an acyclic aliphatic hydrocarbon containing from 3 to 8 carbon atoms.

5. Process according to claim 4, **characterised in that** the diluent (D) is isobutane or propane.

6. Process according to any one of claims 1 to 5, **characterised in that**, in stage (e), the concentrated suspension (CS) drawn off from the cyclone washer is first of all subjected to an expansion before being introduced into the subsequent polymerisation reactor.

7. Process according to any one of claims 1 to 6, **characterised in that**, in stage (f), the suspension (S') obtained from stage (e) is subjected to a treatment under pressure and temperature conditions which ensure the vaporisation of at least one part of the diluent (D).

8. Process according to claim 7, **characterised in that** the diluent (D) is vaporised in pressure and temperature conditions such that the subsequent cooling of the diluent to a temperature less than or equal to 60 °C permits its recondensation without compression.

9. Process according to any one of claims 1 to 8, **characterised in that** the process is applied to the obtaining of a composition containing an ethylene polymer (A) and an ethylene polymer (B) having different comonomer contents and molecular weights.

10. Process according to claim 9, **characterised in that** the polymer (A) is an ethylene homopolymer and **in that** the polymer (B) is an ethylene copolymer containing from 0.4 to 10 wt % of butene and/or of hexene.

11. Process according to claim 9, **characterised in that** the polymer (A) is an ethylene copolymer containing from 0.4 to 10 wt % of butene and/or hexene and **in that** the polymer (B) is an ethylene polymer containing less than 0.4 wt % of butene and/or of hexene

## Patentansprüche

1. Verfahren zur Herstellung einer Zusammensetzung von Olefinpolymeren in wenigstens zwei in Reihe verbundenen Polymerisationsreaktoren, gemäß dem:
(a) in einem ersten Polymerisationsreaktor wenigstens ein Olefin kontinuierlich in Gegenwart eines Verdünnungsmittels (D) und eines Katalysators polymerisiert wird, um eine Suspension (S) herzustellen, die besagtes Verdünnungsmittel (D) und Teilchen eines Olefinpolymers (A) umfasst,
(b) ein Teil der Suspension (S) aus dem Reaktor entnommen wird,
(c) die entnommene Suspension in einen Hydrocyclon eingeleitet wird, in dem einerseits ein Strom (F), der Verdünnungsmittel (D) umfasst, und andererseits eine Suspension (SC), die an Polymerteilchen (A) konzentriert ist, gebildet und getrennt werden,
(d) der Strom (F) aus dem Hydrocyclon entnommen wird und wenigstens teilweise in den ersten Polymerisationsreaktor zurückgeführt wird,
(e) die konzentrierte Suspension (SC) aus dem Hydrocyclon entnommen wird und in einen nachfolgenden Polymerisationsreaktor eingeführt wird, in dem wenigstens ein Olefin polymerisiert wird, um ein Olefinpolymer (B) zu bilden und eine Suspension (S') herzustellen, die das Verdünnungsmittel (D) und Teilchen einer Zusammensetzung von Olefinpolymeren, die das Polymer (A) und das Polymer (B) umfasst, enthält,
(f) die Suspension (S') aus dem nachfolgenden Polymerisationsreaktor entnommen wird und die Teilchen der Zusammensetzung von Olefinpolymeren aus der Suspension (S') abgetrennt werden.

2. Verfahren gemäß Anspruch 1, **dadurch gekennzeichnet, dass** im Schritt (c) die Suspension (S) mit einer Flüssigkeit (L) verdünnt wird, bevor sie in den Hydrocyclon eingeführt wird.

3. Verfahren gemäß Anspruch 2, **dadurch gekennzeichnet, dass** die Flüssigkeit (L) aus Verdünnungsmittel (D) besteht.

4. Verfahren gemäß einem der Ansprüche 1 bis 3, **dadurch gekennzeichnet, dass** das Verdünnungsmittel (D) ein acyclischer aliphatischer Kohlenwasserstoff mit 3 bis 8 Kohlenstoffatomen ist.

5. Verfahren gemäß Anspruch 4, **dadurch gekennzeichnet, dass** das Verdünnungsmittel (D) Isobutan oder Propan ist.

6. Verfahren gemäß einem der Ansprüche 1 bis 5, **dadurch gekennzeichnet, dass** im Schritt (e) die aus dem Hydrocyclon entnommene konzentrierte Suspension (SC) erst entspannt wird, bevor sie in den nachfolgenden Polymerisationsreaktor eingeführt wird.

7. Verfahren gemäß einem der Ansprüche 1 bis 6, **dadurch gekennzeichnet, dass** im Schritt (f) die aus dem Schritt (e) hervorgegangene Suspension (S') einer Behandlung unter Druck- und Temperaturbedingungen, die das Verdampfen wenigstens eines Teils des Verdünnungsmittels (D) gewährleisten, unterzogen wird.

8. Verfahren gemäß Anspruch 7, **dadurch gekennzeichnet, dass** das Verdünnungsmittel (D) unter solchen Druck- und Temperaturbedingungen verdampft wird, dass das spätere Abkühlen des Verdünnungsmittels auf eine Temperatur unterhalb oder gleich 60 °C sein Wiederkondensieren ohne Kompression ermöglicht.

9. Verfahren gemäß einem der Ansprüche 1 bis 8, **dadurch gekennzeichnet, dass** das Verfahren auf den Erhalt einer Zusammensetzung angewandt wird, die ein Ethylenpolymer (A) und ein Ethylenpolymer (B) mit einem unterschiedlichen Comonomergehalt und einer unterschiedlichen Molekülmasse umfasst.

10. Verfahren gemäß Anspruch 9, **dadurch gekennzeichnet, dass** das Polymer (A) ein Ethylenhomopolymer ist, und **dadurch**, dass das Polymer (B) ein Ethylencopolymer mit 0,4 bis 10 Gew.-% Buten und/oder Hexen ist.

11. Verfahren gemäß Anspruch 9, **dadurch gekennzeichnet, dass** das Polymer (A) ein Ethylencopolymer mit 0,4 bis 10 Gew.-% Buten und/oder Hexen ist, und **dadurch**, dass das Polymer (B) ein Ethylenpolymer mit weniger als 0,4 Gew.-% Buten und/oder Hexen ist.
